(19) Europäisches Patentamt
European Patent Office
Office européen des brevets

(11) **EP 2 893 336 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **13756496.9**

(22) Anmeldetag: **04.09.2013**

(51) Int Cl.:
**G01N 27/82** (2006.01)   **G01N 27/90** (2006.01)

(86) Internationale Anmeldenummer:
**PCT/EP2013/068268**

(87) Internationale Veröffentlichungsnummer:
**WO 2014/037388 (13.03.2014 Gazette 2014/11)**

(54) **DIFFERENTIELLER SENSOR, PRÜFSYSTEM UND VERFAHREN ZUR DETEKTION VON ANOMALIEN IN ELEKTRISCH LEITFÄHIGEN MATERIALIEN**

DIFFERENTAIL SENSOR, INVESTIGATION APPARATUS AND METHOD OF DETECTING DEFECTS IN ELECTRICALLY CONDUCTING MATERIALS

CAPTEUR DIFFÉRENTIEL, SYSTÈME D'ANALYSE ET PROCÉDÉ DE DÉTECTION DE DÉFAUX DANS DES MATERIAUX ÉLECTRIQUEMENT CONDUCTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2012 DE 102012017871**

(43) Veröffentlichungstag der Anmeldung:
**15.07.2015 Patentblatt 2015/29**

(73) Patentinhaber: **Institut Dr. Foerster GmbH & Co. KG**
**72766 Reutlingen (DE)**

(72) Erfinder:
• ZEC, Mladen, Dr.
  90443 Nürnberg (DE)
• UHLIG, Robert P.
  98693 Ilmenau (DE)
• ZIOLKOWSKI, Marek
  99338 Plaue (DE)
• BRAUER, Hartmut
  98704 Langewiesen (DE)

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
WO-A1-92/12422       JP-A- H06 294 775
JP-A- 2006 194 602   US-A- 2 519 367
US-A- 3 271 664      US-A- 4 207 519
US-A- 4 218 924      US-A- 6 014 024
US-A1- 2002 103 430

• UHLIG ROBERT P ET AL: "Lorentz force sigmometry: A contactless method for electrical conductivity measurements", JOURNAL OF APPLIED PHYSICS, AMERICAN INSTITUTE OF PHYSICS. NEW YORK, US, Bd. 111, Nr. 9, 1. Mai 2012 (2012-05-01), Seiten 94914-94914, XP012159775, ISSN: 0021-8979, DOI: 10.1063/1.4716005 [gefunden am 2012-05-15]

## Beschreibung

HINTERGRUND UND STAND DER TECHNIK

Die Erfindung betrifft einen differentiellen Sensor, ein Prüfsystem und ein Verfahren zur Detektion von Anomalien in elektrisch leitfähigen Materialien.

Die zerstörungsfreie Detektion von Anomalien in Werkstoffen ist in der heutigen Zeit von großer Bedeutung. Bei einer Anomalie kann es sich beispielsweise um einen Defekt wie einen Riss, eine Verunreinigung oder eine andere Materialinhomogenität, z.B. eine lokale Ungleichmäßigkeit der elektrischen Leitfähigkeit, handeln. Ein großer Bedarf an Materialien mit hohem Last-Zu-Masse-Verhältnis erfordert eine besonders hohe Güte der Materialien. Um Kosten zu sparen und die Qualität jedes produzierten Stückes zu bestimmen, hat der Einsatz zerstörungsfreier Methoden zur Detektion und Lokalisierung von Defekten und zur Bestimmung von Materialparametern zugenommen. Da metallische Werkstoffe für die Industrie eine besondere Rolle spielen, ist die zerstörungsfreie Untersuchung elektrisch leitfähiger Materialien Gegenstand von Forschung, Entwicklung und Anwendung.

Bei der zerstörungsfreien Materialprüfung (non-destructive testing, NDT) werden heutzutage in Abhängigkeit von der Art des Prüflings und den gesuchten Eigenschaften des zu untersuchenden Materials viele unterschiedliche Verfahren eingesetzt. Gemäß dem Artikel "From Fifteen to Two Hundred NDT-Methods in Fifty Years" von T. Aastroem in: 17th World Conference on Nondestructive Testing, 2008, sind aus dem Stand der Technik mehr als 200 Verfahren zur zerstörungsfreien Werkstoffprüfung bekannt.

Besonders elektromagnetische Verfahren haben sich zur Detektion von Anomalien in elektrisch leitfähigen Materialien bewährt. Jedoch sind die zur Verfügung stehenden Verfahren zum Teil in Auflösung, Eindringtiefe und Durchlaufzeit bzw. Prüfgeschwindigkeit begrenzt. Aber auch die Wahrscheinlichkeit, einen Defekt als solchen zu identifizieren, sollten noch gesteigert werden.

Die Anordnung von Sensoren in mehr oder minder großen Sensorarrays ermöglicht mit Hilfe entsprechender Algorithmen die Rekonstruktion von Defekten. Eine solche Anordnung setzt jedoch eine kompakte Bauweise der Sensoren voraus.

Die Wirbelstromprüfung (eddy current testing, ECT) hat sich bei der Prüfung elektrisch leitender Materialien in vielen Anwendungsgebieten bewährt, beispielsweise bei der automatisierten zerstörungsfreien Prüfung an Halbzeugen für die metallerzeugende und metallverarbeitende Industrie, zur Durchführung von Prüfungen an sicherheitsrelevanten und funktionskritischen Bauteilen für Land- und Luftfahrzeuge oder im Anlagenbau.

Ein konventioneller, mit Spulen aufgebauter Wirbelstromsensor umfasst eine oder mehrere Feldspulen (bzw. Erregerspulen), die zur Durchführung der Prüfung an eine Wechselspannungsquelle angeschlossen werden und dann ein elektromagnetisches Wechselfeld (Primärfeld) erzeugen können, welches bei der Prüfung in das Prüfmaterial eindringt und im Wesentlichen in einer oberflächennahen Schicht des Prüfmaterials Wirbelströme erzeugt, die durch Gegeninduktion auf ein oder mehrere Messspulen (bzw. Empfängerspulen) der Wirbelstromsonde zurückwirken. Ein Defekt im geprüften Bereich, beispielsweise ein Riss, eine Verunreinigung oder eine andere Materialinhomogenität, stört die Ausbreitung der Wirbelströme im Prüfmaterial und verändert somit die Wirbelstromintensität und dadurch auch die Intensität des auf die Messspule rückwirkenden magnetischen Sekundärfeldes. Die dadurch verursachten Änderungen der elektrischen Eigenschaften in einer Messspule, z.B. der Impedanz, führen zu elektrischen Messsignalen in Form elektrischer Spannungsänderungen, die mittels einer Auswerteeinrichtung ausgewertet werden können, um Defekte zu identifizieren und zu charakterisieren. Wirbelstromsensoren können auch an defektfreiem Material für Prüfzwecke oder Messzwecke genutzt werden, z.B. bei Messungen der elektrischen Leitfähigkeit oder der magnetischen Permeabilität.

Die Wirbelstromprüfung erlaubt eine Prüfung auf oberflächennahe Defekte mit hoher Empfindlichkeit und Ortsauflösung. Insbesondere die Anwendung des sogenannten "motion induced remote field eddy current testing", beschrieben in dem Artikel "Application of Motion Induced Remote-Field Eddy Current Effect to Online Inspection and Quality Examination of Rolling Metallic Strips" von Sun, Y., Udpa, S., Lord, W., Udpa, L. und Ouyang, T. in: AIP Conf. Proc. 557 (2001) Seiten 1541-1548 zeigt eine hohe Ortsaufsauflösung bei hohen Prüfgeschwindigkeiten.

Auch bildgebende Verfahren, beispielsweise beschrieben im Artikel "Electromagnetic Imaging Using Probe Arrays" von: Mook, G., Michel, F. und Simonin, J. in: Strojniŝki vestnik - Journal of Mecanical Engineering 57 (2011) 3, Seiten 227-236 zeigen eine hohe Empfindlichkeit gegenüber Anomalien im zu untersuchenden Material.

Der Einsatz von magnetischen Wechselfeldern zur Erzeugung des in das Prüflingsmaterial eindringenden magnetischen Primärfeldes hat den Nachteil einer frequenzbegrenzten Eindringtiefe in das zu untersuchende Material. Tiefer liegende Anomalien und Tiefen von schlitzähnlichen Anomalien können daher in der Regel nicht ausreichend gut bestimmt werden, wenn die Tiefe das Dreifache der Eindringtiefe überschreitet (siehe Artikel "Deep Penetrating eddy currents and Probes" von Mook, G., Hesse, O. & Uchanin, V. in: 9th European Conference on Non-Destructive-Testing, 2006). Es wurde beobachtet, dass aber auch schon Anomalien in einer Tiefe, die etwa der Eindringtiefe entspricht, derartige Sensorsysteme vor Probleme stellen können. Mit der frequenzabhängigen Eindringtiefe korrespondiert die Ortsauflösung des eingesetzten Sensorsystems. Möchte man tiefliegende Anomalien detektieren, ist eine niedrigere Frequenz notwendig. Dementsprechend sind nur niedrigere Prüfgeschwindigkeiten möglich, wodurch sich die Durchlaufzeit des Untersuchungsobjektes durch das Sensorsystem erhöht.

Es existieren zahlreiche Dokumente, in denen Verfahren und Sensoren zur Detektion von Defekten beschrieben werden, wobei eine relative Bewegung zwischen einem Sensor und dem zu untersuchenden Werkstoff realisiert wird.

Der Artikel "A new NDT method based on permanent magnetic field pertubation" von Sun, Y., Kang, Y. und Quio, C. in: NDT & E International 44 (2011) Seiten 1 - 7 beschreibt ein zerstörungsfreies Verfahren zur Prüfung von ferromagnetischen Materialien mittels Streuflussprüfung. Ein Permanentmagnet, der senkrecht zur Oberfläche der zu prüfenden Komponente ausgerichtet ist, ist von einer Empfängerspule umwickelt. Damit kann der sogenannte PMFP-Effekt (permanent magnetic field pertubation effect) beobachtet werden, wenn der Magnet in dieser senkrechten Ausrichtung mit definiertem Abstand zur Oberfläche entlang der Oberfläche des Prüflings geführt wird. Das Verfahren soll in der Lage sein, unterschiedlich orientierte Defekte in ferromagnetischen Materialien mit ausreichender Empfindlichkeit detektieren zu können.

Das Patent US 7,023,205 B1 beschreibt einen Wirbelstromsensor, der in der Lage ist, elektrisch leitende Bauteile durch eine elektrisch leitfähige Barriere hindurch zu detektieren. Der Sensor umfasst einen Permanentmagneten, der von einer Spule umwickelt ist. Der Wirbelstromsensor kann an der Außenseite des Gehäuses für eine Turbine oder einer anderen Maschine mit rotierenden Komponenten montiert werden, um die Eigenschaften von an der Innenseite des Gehäuses entlang bewegten elektrisch leitfähigen Komponenten, beispielsweise Turbinenblättern, durch das Gehäuse hindurch zu messen.

In der WO 00/58695 wird ein Verfahren zur Messung von Parametern von metallischen Objekten vorgestellt, bei dem die auf das metallische Objekt wirkende Kraft ermittelt wird. Unter einem metallischen Objekt wird dabei sowohl ein metallisches Fluid als auch ein metallischer Festkörper mit endlichen Abmaßen verstanden.

In dem Patent US 6,002,251 wird eine Sensoranordnung für die Messung des "remote field" mit Hilfe von Wirbelstromsensoren vorgestellt, wobei eine örtliche Trennung von Erreger- und Empfängerspule und eine magnetischen Schirmung des Erregersystems realisiert werden.

Die WO 2007/053519 A2 beschreibt die Detektion von Defekten mit Hilfe einer Bremskraft, die auf einen Magneten wirkt, wenn dieser relativ zu einem Testobjekt bewegt wird.

In den letzten Jahren wurde an der Technischen Universität Ilmenau ein neuartiges kontaktloses zerstörungsfreies Materialprüfverfahren entwickelt, das unter der Bezeichnung "Lorentzkraft-Wirbelstromprüfung" (Lorentz Force Eddy Current Testing, LET) bekannt ist. Grundprinzipien sind z.B. in dem Artikel: "Eddy Current Testing of Metallic Sheets with Defects Using Force Measurements" von Brauer, H., Ziolkowski, M. in: Serbian Journal of Electrical Engineering 2008, 5, Seiten 11 - 20, beschrieben. Werden ein metallischer Prüfling und ein Permanentmagnet in eine Relativbewegung zueinander versetzt, so werden im Prüfling Wirbelströme induziert, die wiederum eine Lorentzkraft hervorrufen, welche eine entsprechende Gegenkraft am Magnetsystem bewirkt. Eine Inhomogenität der elektrischen Leitfähigkeit des Prüflingsmaterials, z.B. hervorgerufen durch einen Riss oder einen anderen Defekt, zeigt sich dabei in einer Veränderung der Lorentzkraft, die mithilfe eines Kraftsensors am Magnetsystem nachgewiesen werden kann. Die Lorentzkraft-Wirbelstromprüfung ermöglicht eine Detektion tiefer liegender Defekte anhand von Messungen der auf das Magnetsystem wirkenden Lorentzkräfte.

Die DE 10 2011 056 650 A1 beschreibt ein Verfahren und eine Anordnung zur Bestimmung der elektrischen Leitfähigkeit eines Werkstoffs basierend auf der Lorentzkraft-Wirbelstromprüfung. Dabei wird ausgenutzt, dass die Lorentzkraft mehrere Kraftwirkungen in unterschiedliche Richtungen umfasst. Eine erste Kraftwirkung und eine in eine andere Richtung wirkende zweite Kraftwirkung werden gemessen und zugehörige Maße durch Quotientenbildung miteinander verrechnet. Das Verfahren kann auch dazu genutzt werden, Inhomogenitäten im Werkstoff zu lokalisieren.

Die JP 2006-194 602 offenbart einen triaxialen magnetometrischen Sensor. Das Ausführungsbeispiel in den Fig. 1 oder 6 weist ein aus einem Kunststoff bestehendes würfelförmiges Element auf, um das drei Spulen mit jeweils senkrecht zueinander orientierten Spulenachsen herumgewickelt sind.

Die JP H06 294775 A offenbart einen Detektor mit einem kubischen Element, um welches Spulen in drei unterschiedlichen Orientierungen herumgewickelt sind. Eine der Spulen ist eine Erregerspule, die beiden anderen dienen als Detektorspulen. Das kubische Element besteht aus einem Material mit hoher Permeabilität, so dass der Detektor einen leicht ummagnetisierbaren Magnetkern aufweist, dessen magnetischer Zustand durch Erregung der Erregerspule leicht geändert werden kann.

Trotz der großen Vielfalt existierender Sensorsysteme zur zerstörungsfreien Werkstoffprüfung besteht weiterhin Bedarf an Sensoren und Sensorsystemen, die es erlauben, Anomalien mit hoher Empfindlichkeit zuverlässig zu detektieren. Insbesondere die Detektion von tiefer liegenden Anomalien im zu untersuchenden Material mit hohen Prüfgeschwindigkeiten stellt weiterhin ein nicht befriedigend gelöstes Problem dar.

AUFGABE UND LÖSUNG

Es ist eine Aufgabe der Erfindung, einen differentiellen Sensor, ein Prüfsystem und ein Verfahren zur Detektion von Anomalien in elektrisch leitfähigen Materialien bereitzustellen, die es erlauben, Anomalien mit hoher Empfindlichkeit und niedriger Fehldetektionsrate auch bei hohen Prüfgeschwindigkeiten zu detektieren, wobei auch die Detektion von tiefer liegenden Anomalien im zu untersuchenden Material realisiert werden kann.

Zur Lösung dieser und anderer Aufgaben wird ein differentieller Sensor mit den Merkmalen von Anspruch 1 bereitgestellt. Weiterhin wird ein Prüfsystem mit den Merkmalen von Anspruch 6 bereitgestellt. Die Aufgabe wird weiterhin gelöst durch ein Verfahren zur Detektion von Anomalien in elektrisch leitfähigen Materialien mit den Merkmalen von Anspruch 13, welches unter Verwendung des Sensors und/oder des Prüfsystems durchgeführt werden kann.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß einem Aspekt stellt die beanspruchte Erfindung einen differentiellen Sensor zur Detektion von Anomalien in elektrisch leitfähigen Materialien bereit. Zum Zwecke der Erzeugung von Wirbelströmen im zu prüfenden Material enthält der Sensor (mindestens) einen Permanentmagneten. Wenn anstelle einer mit alternierendem Strom betriebenen Erregerspule ein Permanentmagnet eingesetzt wird, kann die Eindringtiefe des (primären) Magnetfeldes in dem Werkstoff erhöht werden. Hierdurch wird es möglich, auch tiefer unter der Materialoberfläche liegende Anomalien zu detektieren.

Zur Erzeugung von Sensorsignalen hat der Sensor eine ersten Spule mit einer oder mehreren ersten Windungen, die um den Permanentmagneten herum verlaufen und eine erste Spulenachse definieren, sowie eine zweiten Spule mit einer oder mehreren zweiten Windungen, die um den Permanentmagneten herum verlaufen und eine zweite Spulenachse definieren, wobei die zweite Spulenachse quer zur ersten Spulenachse verläuft. Die Spulen haben also Spulenachsen, die nicht parallel zueinander liegen, sondern in einem endlichen Winkel zueinander stehen. Der Begriff "Spulenachse" bezeichnet hierbei eine Richtung, die im Wesentlichen senkrecht zu einer durch den Verlauf einer Windung definierten Windungsgebene liegt. Die Orientierungen der Spulen können auch durch senkrecht zu den jeweiligen Spulenachsen stehende Spulenebenen definiert werden, die ebenfalls quer zueinander liegen.

Das durch die induzierten Wirbelströme hervorgerufene sekundäre Magnetfeld interagiert mit dem durch den Permanentmagneten bereitgestellten primären Magnetfeld. Gelangt nun eine Anomalie bei der Relativbewegung durch den vom primären Magnetfeld beeinflussten Bereich, so wird das sekundäre Magnetfeld durch diese Anomalie gestört und es wird in den (mindestens) zwei Spulen durch die damit verbundene Änderung des magnetischen Flusses jeweils eine elektrische Spannung induziert.

Der Begriff "differentieller Sensor" beschreibt in diesem Zusammenhang die Fähigkeit des Sensors, zeitliche Änderungen des magnetischen Flusses $\Phi$ durch Erfassen von in den Windungen bzw. in den Spulen induzierten elektrischen Spannungen zu erfassen. Da diese Änderung mit der Zeit t durch das Differential $d\Phi/dt$ beschrieben werden kann, wird der Sensor als "differentieller Sensor" bezeichnet. Ein "differentieller" Sensor unterscheidet sich von den bekannten Wirbelstrom-Differenzsonden unter anderem dadurch, dass bei Wirbelstrom-Differenzsonden achsparallele Spulen paarweise in Differenz zueinander geschaltet werden (z.B. mittels gegenläufigem Windungssinn), um ein Differenzsignal zu erhalten, während die Spulen eines "differentiellen Sensors" nicht in Differenz zueinander geschaltet sind, sondern voneinander unabhängige Signale erzeugen, die auch unabhängig voneinander ausgewertet werden können.

Da mindestens zwei unterschiedliche Spulen (erste Spule und zweite Spule) vorgesehen sind, deren Spulenachsen nicht parallel zueinander verlaufen, sondern quer zueinander ausgerichtet sind, können die zeitlichen Änderungen des magnetischen Flusses für mehrere Raumrichtungen separat erfasst werden. Die Bereitstellung von zwei (oder mehr) Spulen mit nicht-parallelen Spulenachsen erlaubt somit ein voneinander unabhängiges Erfassen von Komponenten der Änderung des magnetischen Flusses in mehreren Raumrichtungen. Aufgrund dieser Funktionalität kann der Sensor auch als "Mehrkomponentensensor" bezeichnet werden, wobei sich der Begriff "Komponenten" hier auf die Komponenten der Änderung des magnetischen Flusses in unterschiedlichen Raumrichtungen bezieht.

Es hat sich gezeigt, dass ein derartiger Mehrkomponentensensor die Wahrscheinlichkeit von Fehlanzeigen im Vergleich mit entsprechenden Sensoren mit nur einer Spule reduzieren kann, da die Änderung des magnetischen Flusses gleichzeitig in mehreren Raumrichtungen erfasst werden kann. Somit können "echte" Defekte, wie beispielsweise Risse oder Lunker, anhand der Sensorsignale von Pseudodefekten unterschieden werden, die z.B. nur in einer der Spulen signifikante Änderungen des magnetischen Flusses erzeugen.

Obwohl zwei Spulen zur mehrdimensionalen Erfassung der Änderungen des magnetischen Flusses ausreichen können, ist bei einer bevorzugten Ausführungsform eine dritte Spule mit einer oder mehreren dritten Windungen vorgesehen, die um den Permanentmagneten herum verlaufen und eine dritte Spulenachse definieren, die quer zur ersten Spulenachse und zur zweiten Spulenachse verläuft. Damit ist eine noch genauere Zerlegung der zeitlichen Änderung des magnetischen Flusses in die verschiedenen Raumrichtungen bzw. Komponenten möglich. Vorzugsweise hat ein Sensor genau drei nicht-koaxiale Spulen.

Bei bevorzugten Ausführungsformen sind die Spulenachsen der Spulen wechselseitig senkrecht zueinander orientiert, wodurch eine Separierung der Gesamtänderung des magnetischen Flusses in seine Komponenten in drei Richtungen eines kartesischen Koordinatensystems möglich ist. Hierdurch wird die Auswertung stark vereinfacht. Es wäre auch möglich, die erste Spule, die zweite Spule und gegebenenfalls auch die dritte Spule relativ zueinander so zu orientieren, dass die Spulenachsen andere Winkel zueinander aufweisen, beispielsweise 60°-Winkel oder 30°-Winkel oder dergleichen.

Günstig sind in der Regel Ausführungsformen, bei denen die erste Spule, die zweite Spule und/oder die dritte Spule an dem Permanentmagneten fixiert ist/sind. Durch eine mechanisch feste Verbindung zwischen Permanentmagnet und Spulen ist sichergestellt, dass keine Relativbewegung zwischen dem Permanentmagneten und den Spulen möglich ist, so dass das primäre Magnetfeld des Permanentmagneten in den Spulen während des Betriebs keine Spannungen induzieren kann und somit alle in den Spulen induzierten Spannungen ausschließlich auf das sekundäre Magnetfeld zurückgehen, welches durch die induzierten Wirbelströme im Material induziert wird. Es wäre jedoch auch möglich, eine oder mehrere der Spulen nicht direkt am Permanentmagneten, sondern an einer anderen Komponente des Sensors zu fixieren, welche vorzugsweise mechanisch fest mit dem Permanentmagneten gekoppelt ist.

Die Fixierung der Spulen am Permanentmagneten ermöglicht zudem die Konstruktion von kompakten Sensoren mit besonders kleinen räumlichen Abmessungen, die nur einen entsprechend kleinen Bauraum benötigen. Außerdem ist die Konstruktion kostengünstig, da außer einem Permanentmagneten und den Spulen keine weiteren elektrischen / magnetischen Komponenten nötig sind. Die kompakte Bauform macht derartige Sensoren auch besonders geeignet für den Einsatz in Sensorarrays, also in Sensorsystemen mit mehreren Sensoren, die relativ eng zueinander in einer eindimensionalen oder zweidimensionalen Anordnung vorliegen, um z.B. gleichzeitig größere Flächenbereiche eines zu prüfenden Werkstoffs erfassen zu können. Bei manchen Ausführungsformen bilden mehrere differentielle Sensoren ein eindimensionales oder zweidimensionales Sensorarray.

Vergleicht man erfindungsgemäße differentielle Sensoren mit Sensoren für die oben beschriebene Lorentzkraft-Wirbelstromprüfung, so ist zu bemerken, dass erfindungsgemäße differentielle Sensoren die Änderung des magnetischen Flusses detektieren, während bei der Lorentzkraft-Wirbelstromprüfung die Absolutwerte der am Magnetsystem angreifenden Kraft durch entsprechende Kraftsensoren aufgenommen und ausgewertet werden. Während jedoch mechanische Kraftmesssysteme aufgrund der Messbedingungen nur relativ begrenzte Dynamik haben, weil zur Kraftmessung mechanische Veränderungen im System erzeugt werden müssen, existiert eine solche Einschränkung der Messdynamik bei erfindungsgemäßen induktiven Sensoren nicht. Damit sind im Vergleich zur Lorentzkraft-Wirbelstromprüfung Messungen mit höheren Prüfgeschwindigkeiten möglich.

Es kann theoretisch gezeigt werden, dass die bei der Lorentzkraft-Wirbelstromprüfung zur Messung genutzten Änderung der Lorentzkräfte unmittelbar mit Änderungen des magnetische Flusses korrelieren, sodass Erkenntnisse, die im Zusammenhang mit der Auswertung von Signalen der Lorentzkraft-Wirbelstromprüfung gewonnen wurden, ggf. auch bei der Prüfung mit differentiellen Sensoren gemäß der beanspruchten Erfindung genutzt werden können.

Bei manchen Ausführungsformen ist zusätzlich zu dem differentiellen Sensor ein Kraftsensor vorgesehen, der mechanisch mit dem differentiellen Sensor derart gekoppelt ist, dass auf den differentiellen Sensor einwirkende Lorentzkräfte mittels des Kraftsensors in mehreren Raumrichtungen erfassbar sind. Dadurch wird ein Kombinationssensor bzw. eine Sensorkombination geschaffen. Eine solche Kopplung mit einem Kraftaufnehmer ermöglicht die zeitgleiche Durchführung zweier unterschiedlicher Verfahren, wobei in einem Prüfverfahren mit Hilfe des differentiellen Sensors über die in mehreren Raumrichtungen erfasste Änderung des magnetischen Flusses (dΦ/dt) Defekte erfasst werden können und zeitgleich am gleichen Prüfvolumen in einem Messverfahren die elektrische Leitfähigkeit durch zweckmäßige Korrelation von Lorentzkraft-Komponenten in unterschiedliche Raumrichtungen erfasst werden kann.

Ein differentieller Sensor der hier beschriebenen Art kann beispielsweise im Kombination mit einem Verfahren und einer Anordnung zur Bestimmung der elektrischen Leitfähigkeit eines Werkstoffs gemäß der oben genannten DE 10 2011 056 650 A1 verwendet werden.

Die Erfindung bezieht sich auch auf ein Prüfsystem zur Detektion von Anomalien in elektrisch leitfähigen Materialien, wobei das Prüfsystem mindestens einen differentiellen Sensor der oben beschriebenen Art aufweist. Der Sensor ist im Prüfbetrieb an eine Auswerteeinrichtung angeschlossen, die dafür konfiguriert ist, in den Windungen der mindestens zwei Spulen induzierte elektrische Spannungen oder daraus abgeleitete Signale separat für jede Spule zu erfassen und durch Anwendung mindestens eines Auswerteverfahrens zu korrelieren.

Beispielsweise kann die Auswerteeinrichtung dafür eingerichtet sein, ein auf einen Defekt hinweisendes Defektsignal bzw. eine darauf basierende Defektanzeige nur dann zu erzeugen, wenn sowohl in der ersten Spule als auch in der zweiten Spule eine für einen Defekt typische Spannungsänderung induziert wird. Dadurch kann die Rate von Fehldetektionen verringert werden.

Wenn noch ein mit dem differentiellen Sensor mechanisch gekoppelter, mehrdimensional wirkender Kraftsensor der oben erwähnten Art vorgesehen ist, ist eine Auswerteeinrichtung zur Auswertung von Signalen des Kraftsensors für mehrere Raumrichtungen vorgesehen.

Die Erfindung bezieht sich auch auf ein Verfahren zur Detektion von Anomalien in elektrisch leitfähigen Materialien, bei dem ein differentieller Sensor bzw. ein Prüfsystem mit einem solchen Sensor verwendet wird. Dabei wird (mindestens) ein differentieller Sensors in der Nähe einer Oberfläche eines Prüfobjekts aus elektrisch leitfähigem Material in der Weise angeordnet, dass ein vom Permanentmagneten erzeugtes Magnetfeld in das Prüfobjekt bis in eine Eindringtiefe eindringen kann. Es wird eine Relativbewegung zwischen dem differentiellen Sensor und dem Prüfobjekt parallel zu einer Bewegungsrichtung erzeugt. Das ist durch Bewegen des Prüfobjekts bei ruhenden Sensor oder Bewegen des Sensors bei ruhenden Prüfobjekt oder durch eine Kombination von Bewegungen von Prüfobjekt und Sensor möglich. Der Abstand zwischen Sensor und Prüflingsoberfläche sollte dabei möglichst konstant sein. Durch die Relativbewegung werden in dem Einwirkungsbereich des Magnetfeldes im Material Wirbelströme erzeugt, deren sekundäres Magnetfeld auf die Spulen des differentiellen Sensors wirkt. Die in den Windungen der Spulen des differentiellen Sensors induzierten elektrischen Spannungen oder daraus abgeleitete Signale werden separat für jede Spule erfasst und durch Anwenden mindestens eines Auswerteverfahrens ausgewertet, wodurch Anomalien in elektrisch leitfähigen Material detektiert werden können.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im Folgenden näher erläutert.

## KURZBESCHREIBUNG DER ZEICHNUNGSFIGUREN

Fig. 1 zeigt eine Ausführungsform eines Prüfsystems mit einem differentiellen Sensor gemäß einer Ausführungsform der Erfindung im Prüfbetrieb;

Fig. 2 zeigt schematisch eine Ausführungsform eines dreidimensional wirkenden differentiellen Sensors;

Fig. 3 zeigt schematisch eine Ausführungsform eines zweidimensional wirkenden differentiellen Sensors;

Fig. 4 zeigt schematisch Messsignale einer konventionellen Lorentzkraft-Wirbelstromprüfung ohne (-) und mit (- - -) Defekt, wobei 4A das Kraftsignal in Bewegungsrichtung des Materials und 4B das Kraftsignal in Hubrichtung zeigt;

Fig. 5 zeigt induzierte Spannungssignale bei einem differentiellen Sensor gemäß einer Ausführungsform der Erfindung, wobei 5A das Signal einer Spule mit Spulenachse in x-Richtung (Bewegungsrichtung) und Fig. 5B das Signal einer Spule mit Spulenachse in z-Richtung (Hubrichtung) zeigt;

Fig. 6 zeigt schematisch ein Prüfsystem, das für eine Kombination von Lorentzkraft-Wirbelstromprüfung und differentieller WirbelstromPrüfung konfiguriert ist;

Fig. 7 zeigt ein zweidimensionales Sensorarray mit einer Vielzahl identischer differentieller Sensoren; und

Fig. 8 zeigt ein Prüfsystem mit einem Sensorsystem, das zwei differentiellen Sensoren aufweist, die zum Zwecke der Abstandskompensation in unterschiedlichen Prüfabständen zum Prüfobjekt angeordnet sind.

## DETAILLIERTE BESCHREIBUNG BEVORZUGTER AUSFÜHRUNGSFORMEN

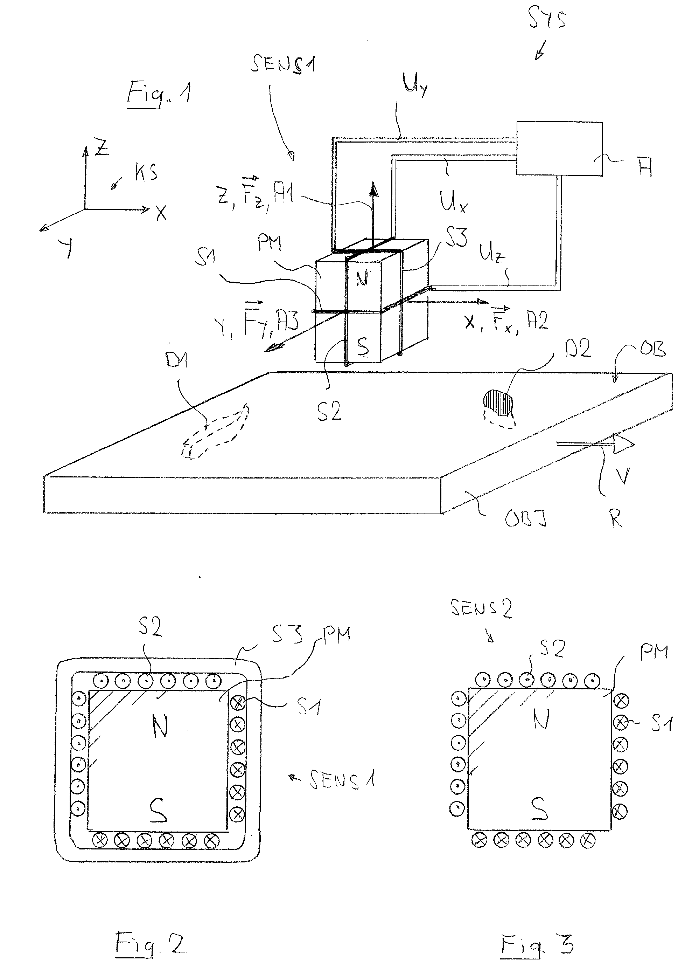

Die schematische Fig. 1 zeigt eine Ausführungsform eines Prüfsystems mit einem differentiellen Sensor gemäß einer Ausführungsform der Erfindung im Prüfbetrieb bei der Durchführung eines Verfahrens zur Detektion von Anomalien in einem Prüfobjekt OBJ, welches zumindest im Bereich einer Oberfläche OB, ggf. auch vollständig, aus einem elektrisch leitenden Material besteht.

Bei dieser Prüf- bzw. Messanordnung ruht das Prüfsystem in Bezug auf das raumfeste kartesische Koordinatensystem KS, während das Prüfobjekt relativ dazu mit einer Geschwindigkeit v in einer Bewegungsrichtung R in x-Richtung bewegt wird. Das Prüfobjekt, z.B. eine Platte oder ein Band aus Stahl, Aluminium oder einem anderen ferromagnetischen oder nicht-ferromagnetischen Metall, enthält im Beispielsfall einen verborgenen Defekt D1, der nicht bis zur Oberfläche OB des Prüfobjektes reicht und in einer gewissen Tiefe liegt, sowie einen oberflächennahen Defekt D2 in Form eines Lunkers, der bis zur Oberfläche OB reicht.

Das Prüfsystem SYS weist einen differentiellen Sensor SENS1 auf, der an eine Auswerteeinrichtung A angeschlossen ist. Der Sensor SENS1 weist einen Permanentmagneten PM auf, bei dem es sich im Beispielsfall um ein quaderförmiges Stück eines Seltenerdmagneten handelt. Zur Durchführung der Prüfung wird der Permanentmagnet in Bezug auf das Prüfobjekt in dessen Nähe gebracht und so orientiert, dass seine magnetische Achse, also die Verbindungslinie zwischen magnetischem Nordpol N und dem magnetischen Südpol S, möglichst senkrecht zur Oberfläche OB des Prüfobjekts steht.

Der Sensor hat eine erste Spule S1 mit einer oder mehreren ersten Windungen, die um den Permanentmagneten herum verlaufen und eine (senkrecht zu den Windungen orientierte) erste Spulenachse definieren, die im Beispielsfall parallel zur magnetischen Achse des Permanentmagneten bzw. parallel zur z-Richtung verläuft. Weiterhin ist eine zweite Spule S2 mit einer oder mehreren zweiten Windungen vorgesehen, die um den Permanentmagneten herum verlaufen und eine zweiten Spulenachse definieren, die senkrecht zur ersten Spulenachse verläuft, und zwar in der x-Richtung, die während der Prüfung möglichst parallel zur Bewegungsrichtung R orientiert ist. Zusätzlich ist eine dritte Spule S3 vorgesehen, die ebenfalls eine oder mehrere Windungen aufweist, die um den Permanentmagneten herum verlaufen und eine dritte Spulenachse definieren, die senkrecht zur ersten und zweiten Spulenachse und somit parallel zur y-Richtung verläuft.

Die drei Spulenachsen bzw. die senkrecht zu den jeweiligen Spulenachsen liegenden Spulenebenen liegen also wechselseitig senkrecht zueinander. Die Spulen sind im Beispielsfall aus isoliertem Draht gewickelt und gegeneinander elektrisch isoliert. Die Spulen sind am Permanentmagneten z.B. mittels Klebstoff fixiert, so dass eine Relativbewegung gegenüber diesem nicht möglich ist. Die Anordnung aus Permanentmagnet und Spulen kann in eine elektrisch nicht leitende, nicht magnetisierbare Kunststoffmasse eingegossen sein, die aus Vereinfachungsgründen nicht dargestellt ist. Die Spulen sind jeweils separat voneinander an die Auswerteeinrichtung A angeschlossen, wobei jeder der Spulen ein eigener Eingangskanal zugeordnet ist.

Das Prüfsystem ist in der Lage, zeitliche Änderungen des magnetischen Flusses $\Phi$ in dem von den Spulen erfassten Bereich zu detektieren, indem die in den Windungen der einzelnen Spulen induzierten elektrischen Spannungen mittels der Auswerteeinrichtung erfasst und ausgewertet werden. Die zeitlichen Änderungen des magnetischen Flusses können für die drei Raumrichtungen eines kartesischen Koordinatensystems separat erfasst werden. Komponenten der Änderung des magnetischen Flusses in z-Richtung werden durch die erste Spule S1 erfasst und induzieren in dieser entsprechend eine elektrische Spannungen $U_z$. Komponenten der Änderung des magnetischen Flusses in x-Richtung, also mehr oder weniger parallel zur Bewegungsrichtung R des Prüfobjekts, erzeugen in der zweiten Spule S2 eine entsprechende elektrische Spannung $U_x$. Komponenten, welche senkrecht zu den genannten Komponenten parallel zur y-Richtung, also in Querrichtung der Bewegung gerichtet sind, erzeugen in der dritten Spule S3 eine entsprechende Spannung $U_y$. Die einzelnen Spannungen werden in der Auswerteeinrichtung separat erfasst und können dann mit Hilfe unterschiedlicher Auswerteverfahren miteinander korreliert werden.

Da der Sensor SENS1 in der Lage ist, zeitliche Änderungen des magnetischen Flusses, also ein Differential $d\Phi/dt$, in mehrere Raumrichtungen separat zu erfassen, wird er auch als "differentieller Mehrkomponentensensor" bezeichnet.

Fig. 2 zeigt schematisch eine mögliche Ausgestaltung des dreidimensional wirkenden Sensors SENS1 aus Fig. 1. Die Windungen der ersten Spule S1 und der zweiten Spule S2 sind in zueinander senkrechten Richtungen jeweils direkt auf den Außenumfang des Permanentmagneten gewickelt, während die Windung der dritten Spule S3 senkrecht zu den Windungen der anderen beiden Spulen um diese herum gewickelt sind. Auch eine umgekehrte Anordnung ist möglich.

Fig. 3 zeigt eine vereinfachte Variante eines Sensors SENS2, der lediglich eine erste Spule S1 und eine zweite Spule S2 aufweist, so dass nur zwei Komponenten der Änderung des magnetischen Flusses in zwei zueinander senkrechten Raumrichtungen erfasst werden können. Dies kann für viele Mess- bzw. Prüfzwecke ausreichen.

Das Funktionsprinzip des Sensors bzw. des Prüfsystems kann wie folgt beschrieben werden. Durch eine Relativbewegung zwischen dem mit Spulen umwickelten Permanentmagneten PM und dem Prüfobjekt aus elektrisch leitfähigem Material werden in dem Prüfobjekt durch das Magnetfeld des Permanentmagneten Wirbelströme induziert. Diese wiederum erzeugen ein sekundäres Magnetfeld, welches mit dem primären Magnetfeld des Permanentmagneten interagiert und sich diesem überlagert. Die Spulen "sehen" dabei das überlagerte Gesamtfeld (Primärfeld und Sekundärfeld), wobei jedoch nur Änderungen des Sekundärfeldes in den Spulen als induzierte Spannungen registriert werden. Anomalien in dem Prüfobjekt verursachen eine Änderung des magnetischen Flusses im Bereich der Spulen und können somit durch den differentiellen Sensor erfasst werden.

Das Prüfverfahren, das Prüfsystem und der Sensor bieten im Vergleich zur konventionellen Wirbelstromprüfung (Erregung des Primärfeldes mittels stromdurchflossener Erregerspulen) einige Vorteile, die auch durch die eingangs beschriebene Lorentzkraft-Wirbelstromprüfung erzielt werden konnten, unter anderem eine erhöhte Eindringtiefe. Im Vergleich zur Lorentzkraft-Wirbelstromprüfung ergeben sich jedoch weitere Vorteile, vor allem im Hinblick auf eine höhere mögliche Dynamik der Prüfung (größere Prüfgeschwindigkeiten) und die Vermeidung von Fehldetektionen. Zum besseren Verständnis werden nachfolgend einige Gemeinsamkeiten und wesentliche Unterschiede der beiden Verfahren und Sensorsysteme erläutert.

Wie bereits erwähnt, wird bei der Lorentzkraft-Wirbelstromprüfung zur Erzeugung der Wirbelströme im zu prüfenden Material ein magnetisches Gleichfeld genutzt, welches z.B. durch einen Permanentmagneten oder eine mit Gleichstrom betriebene Spule generiert wird. Die zeitliche Änderung des Magnetfeldes bei der Wechselwirkung mit dem Material wird durch Erzeugen einer Relativgeschwindigkeit zwischen Prüfobjekt und Gleichfeldquelle erzeugt.

Gemäß dem Ohmschen Gesetz für bewegte Ladungsträger werden bei einer magnetischen Flussdichte B und einer Geschwindigkeit v der Relativbewegung Wirbelströme mit Stromdichte j im Prüfobjekt induziert:

$$\vec{j} = \sigma \cdot \left( \vec{v} \times \vec{B} \right)$$

Die Wirbelströme interagieren ihrerseits wieder mit dem primären Gleichfeld. Diese Interaktion in einem Volumen V des Materials führt zu einer Kraftwirkung auf das zu prüfende Material, welche mit Lorentzkraft $F_{LF}$ bezeichnet wird:

$$\vec{F}_{LF} = \iiint\limits_{(V)} \left( \vec{j} \times \vec{B} \right) dV$$

Dem 3. Newtonschen Axiom "actio = reactio" entsprechend muss eine zweite Kraft existieren, die auf den Verursacher der Lorentzkraft, also auf die Quelle des primären Magnetfeldes, nämlich den Permanentmagneten PM, zurückwirkt. Die Kraft ist eine vektorielle Größe und besitzt drei Raumrichtungen. In Fig. 1 sind die entsprechenden Kraftkomponenten $F_x$, $F_y$ und $F_z$ in x-, y-, und z-Richtung eingezeichnet. Enthält das zu prüfende Material keinen Defekt, so sind die Bahnen der Wirbelströme ungestört und die Lorentzkraft ist konstant. Stört ein Defekt die Bahnen der Wirbelströme, werden Kraftänderungen hervorgerufen, die gemessen werden können.

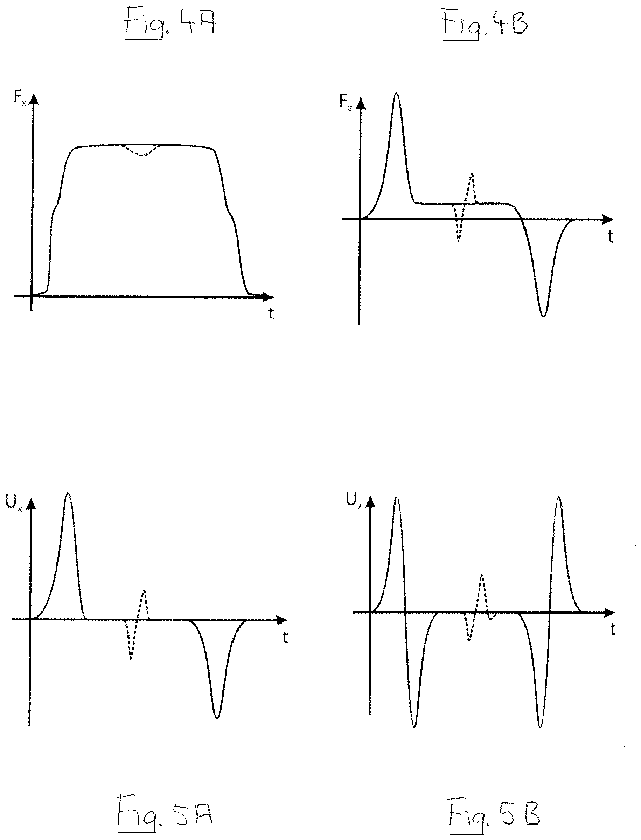

Figur 4 zeigt zur Veranschaulichung typische Messsignale der Lorentzkraft-Wirbelstromprüfung ohne (durchgezogene Linie) und mit (gestrichelte Linie) Defekt, wobei 4A das Kraftsignal in Bewegungsrichtung des Materials (x-Achse) und 4B das Kraftsignal in Hubrichtung (z-Achse) zeigt.

Da das primäre Magnetfeld ein Gleichfeld ist, wird die Eindringtiefe der Wirbelströme in das Material durch die Relativgeschwindigkeit bestimmt und nicht wie bei der klassischen Wirbelstromprüfung hauptsächlich durch die Erregerfrequenz. Dadurch können Defekte unter gleichen Messbedingungen potentiell in größeren Tiefen detektiert werden.

Kräfte können lediglich anhand ihrer Wirkung gemessen werden. Üblich ist die Verwendung von mechanischen Deformationskörpern, an denen über Dehnung und Stauchung auf die wirkenden Kräfte zurückgerechnet werden kann. Diese Deformationskörper sind strukturmechanisch eher von geringer Steifigkeit. Aus diesem Grund ist die Eigenfrequenz häufig im unteren Hz-Bereich. Da hohe Messgeschwindigkeiten eine hohe Dynamik des Messsystems erfordern, sind Systeme mit niedrigen Eigenfrequenzen nicht geeignet. Die Störung wird schlichtweg vom System nicht wahrgenommen, wenn sie in einer zu kurzen Zeitspanne erfolgt (Schwingungsisolierung).

Ebenfalls nachteilig kann sich die dauerhaft wirkende Lorentzkraft auf das Prüfsystem auswirken. Die Sensorik muss einen entsprechend großen Messbereich abdecken. Die Störung, welche auf einen Defekt hinweist, ist klein verglichen mit der wirkenden Lorentzkraft. Entsprechend muss eine hohe Auflösung gewährleistet werden. Die beiden Ansprüche (Messbereich, Auflösung) sind gegenläufig und stellen einen Zielkonflikt dar, der normalerweise nur durch technische Kompromisse lösbar ist.

Im Gegensatz zur klassischen Wirbelstromprüfung eignet sich die Lorentzkraft-Wirbelstromprüfung nur bedingt zur Prüfung von ferromagnetischen Materialien. Die hohen Anziehungskräfte zwischen Magnet und Prüfmaterial müssen kompensiert werden. Sonst werden die Lorentzkraft und insbesondere die Störungen durch die Anziehungskräfte überlagert und lassen sich nicht befriedigend detektieren.

Die Lorentzkraft-Wirbelstromprüfung ist nicht durch eine frequenzabhängige, sondern eine geschwindigkeitsabhängige Eindringtiefe limitiert. Die Geschwindigkeitslimitierung wird ab Geschwindigkeiten von 1 m/s durch nichtlineares Verhalten der Kraftwirkung spürbar. Das Verfahren eignet sich potentiell für die Detektion von Defekten in nicht-ferromagnetischen Materialien, die die Oberfläche durchdringen oder sich in Oberflächennähe befinden. Die spezifische elektrische Leitfähigkeit des Prüfmaterials kann mithilfe von zwei gemessenen Kraftkomponenten bestimmt werden (vgl. DE 10 2011 056 650 A1).

Um den beschriebenen Zielkonflikt der Prüfung mit der Lorentzkraft-Wirbelstromprüfung auszuräumen, wäre es möglich, nur die zeitliche Änderung des Kraftsignals zu erfassen. Die Änderung eines Signals kann einerseits durch eine Differenzanordnung bestimmt werden, welche zwei gleichartige Messsysteme erfordert, von denen eines einen defektfreien Teil des zu prüfenden Materials examiniert, während das andere einen Defekt überfährt; andererseits kann eine Änderung durch die zeitliche Ableitung (Differential) eines Signals bestimmt werden.

Es wurde erkannt, dass es problematisch ist, die zeitliche Ableitung am Kraftsignal zu bestimmen, da man in diesem Fall das Rauschen verstärkt. Besser ist eine physikalische Größe zu messen, die über die zeitliche Änderung mit der Lorentzkraft verknüpft ist.

Das Kraftsignal wird durch das Gesamtmagnetfeld generiert, welches durch die Interaktion von primärem und sekundärem Magnetfeld entsteht. Die zeitliche Änderung des sekundären Magnetfeldes bewirkt auch die zeitliche Änderung des Gesamtmagnetfeldes. Der primäre Gleichanteil hat auf die zeitliche Ableitung keinen Einfluss. Das sekundäre Magnetfeld ändert sich als Reaktion auf gestörte Wirbelstrombahnen. Diese zeitliche Änderung im Magnetfeld lässt sich mit verschiedenen Sensoren, z.B. Induktionsspulen messen. In einer Spule mit Windungszahl N und Spulenfläche A erzeugt die zeit-

liche Änderung des magnetischen Flusses eine elektrische Spannung U:

$$U = N \cdot \frac{d\Phi}{dt} = N \cdot \frac{d}{dt}\left(\int_{(A)} \vec{B} \cdot d\vec{A}\right)$$

**[0069]** Es kann gezeigt werden, dass diese Spannung proportional zu der entsprechenden Komponente Lorentzkraft ist.

**[0070]** Die so erzeugte Spannung enthält die Änderungen des magnetischen Feldes, die durch Körperkanten oder Anomalien der Materialeigenschaften hervorgerufen werden. Anomalien der Materialeigenschaften können unter anderem Abweichungen in Leitfähigkeit und Permeabilität, Lufteinschlüsse und Risse sein. Das Verfahren wird aufgrund der Ausnutzung der zeitlichen Ableitung als "differentielles" Verfahren bezeichnet. Insbesondere kann das Verfahren als "Bewegungsinduzierte Sekundärfeld-Wirbelstromprüfung" (Motion Induced Secondary Field Eddy Current Testing, MISFECT) bezeichnet werden.

**[0071]** Da bei einem zeitlich unveränderlichen Signal (kein Material im Prüfeingriff, Material im Prüfeingriff aber kein Defekt) die Spannung null ist und nur bei Änderungen eine Spannung gemessen wird, reicht es, einen kleinen Messbereich abzudecken, um Defekte zu detektieren. Die nun mögliche hohe Auflösung des Messsystems sorgt für eine Erhöhung der Wahrscheinlichkeit zur Defektdetektion. Ein solcher Sensor ist passiv, da keine Energieversorgung notwendig ist, und überlastsicher, da nur geringe elektrische Spannungen induziert werden, die den Sensor nicht zerstören können.

**[0072]** Zur Veranschaulichung zeigt Fig. 5 induzierte Spannungssignale in Spulen mit unterschiedlicher Orientierung, wobei 5A das Signal der zweiten Spule mit Spulenachse in x-Richtung (Bewegungsrichtung) und Fig. 5B das Signal der ersten Spule mit Spulenachse in z-Richtung (Hubrichtung) zeigt.

**[0073]** Die zeitliche Korrelation von zwei oder mehr Spannungssignalen kann genutzt werden, um den Pseudoausschuss (schlecht geprüfte Gutteile) zu reduzieren. Da die Änderung im Magnetfeld gleichzeitig in mehreren Spulen auftreten sollte, kann man Fehlersignale, die nur in einer Komponente des Sensors auftreten, ignorieren.

**[0074]** Im Gegensatz zu der Lorentzkraft-Wirbelstromprüfung stören magnetische Anziehungskräfte das Messsystem nicht mehr. Entsprechend können mit der hier vorgestellten bewegungsinduzierten Sekundärfeld-Wirbelstromprüfung auch ferromagnetische Materialien mit hoher Empfindlichkeit und Prüfgeschwindigkeit untersucht werden.

**[0075]** Differentielle Wirbelstromsensoren der bisher beschriebenen Art können vorteilhaft in Kombination mit einem Mehrkomponenten-Lorentzkraft-Wirbelstromsensor verwendet werden, der zur Erfassung der Komponenten des Absolutwerts der induzierten Lorentzkraft in den jeweiligen Raumrichtungen ausgelegt ist. Aufgrund der Verwandtschaft der beiden Verfahren ist es dadurch unter Anderem möglich, zeitgleich mit der zerstörungsfreien Prüfung auf Defekte zum Beispiel auch eine Messung der spezifischen elektrischen Leitfähigkeit des geprüften Materials vorzunehmen.

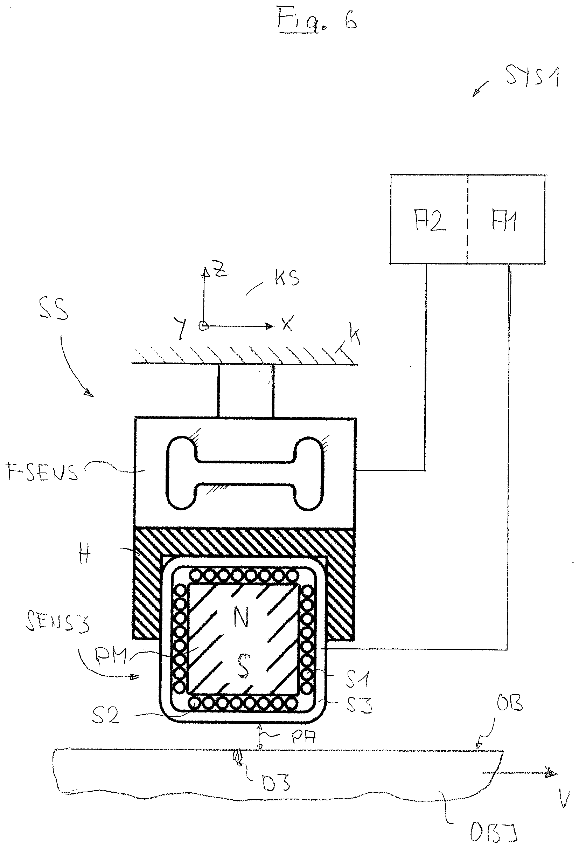

**[0076]** Zur Veranschaulichung zeigt Figur 6 schematisch wesentliche Komponenten eines für eine derartige Kombinationsprüfung konfigurierten Prüfsystems SYS1. Der Kombinationssensor SS bzw. die Sensorkombination SS dieses Prüfsystems weist einen differentiellen Sensor SENS3 zur Erfassung der Änderung des magnetischen Flusses in drei Dimensionen auf, dessen Aufbau und Funktion denjenigen des Sensors SENS1 aus Figur 1 oder 2 entsprechen kann. Entsprechende Komponenten tragen dieselben Bezugszeichen wie in Figur 1 und 2. Auf die diesbezügliche Beschreibung wird verwiesen. Die drei orthogonal zueinander um den Permanentmagneten PM herum gewickelten Spulen S1, S2, S3 sind separat voneinander an eine erste Auswerteeinrichtung A1 angeschlossen.

**[0077]** Der Sensor SENS3 ist mit Hilfe einer Haltereinrichtung H aus einem elektrisch nicht leitenden, nicht magnetisierbaren Material an der Unterseite eines Kraftsensors F-SENS befestigt und dadurch mechanisch fest mit diesem gekoppelt. Die Haltereinrichtung kann beispielsweise durch eine Kunststoffumhüllung des Sensors SENS3 gebildet sein, welche an eine geeignete Anschlussfläche des Kraftsensors geklebt oder mit diesem verschraubt ist. Der Kraftsensor F-SENS ist mechanisch starr mit einer raumfest installierten Komponente K des Prüfsystems SYS1 gekoppelt, dessen Positionen und Orientierung im Raum durch das raumfeste Koordinatensystem KS beschrieben werden kann.

**[0078]** Der Kraftsensor ist schematisch durch einen Deformationskörper geringer mechanischer Steifigkeit repräsentiert, dessen Dehnung oder Stauchung oder Verschränkung aufgrund externer Kräfte über Dehnmessstreifen oder andere elektromechanische Wandler erfasst werden kann, wobei aus den elektrischen Wandlersignalen auf die die Deformation verursachenden Kräfte zurückgerechnet werden kann. Der Kraftsensor ist an eine zweite Auswerteeinrichtung A2 angeschlossen, mit der zugehörige Maße für die Kraftwirkung in die drei Raumrichtungen ermittelt werden können.

**[0079]** Der Kombinationssensor SS ist im Beispielsfall mit geringem Prüfabstand PA oberhalb der Oberfläche OB des metallisch leitenden Prüfobjekts OBJ angeordnet, welches sich mit Geschwindigkeit v parallel zu x Richtung relativ zum ruhenden Kombinationssensor SS bewegt.

**[0080]** Bei dem Prüfobjekt kann es sich beispielsweise um eine metallische Platte mit einer Vorderkante und eine Hinterkante (in Bewegungsrichtung gesehen) und einem oberflächennahen Defekt D3 handeln. Die Figuren 4 und 5 zeigen schematisch mögliche Sensorsignale oh-

ne Defekt (durchgezogene Linien) und mit Defekt (gestrichelte Linie) in zwei Dimensionen, nämlich zum Einen parallel zur Durchlaufrichtung (x-Richtung) in den Fig. 4A und 5A und in z-Richtung, also in Hubrichtung senkrecht zur Prüflingsoberfläche in den Fig. 4B und 5B.

Das Kraftsignal $F_x$ in Bewegungsrichtung steigt bei Erreichen der Vorderkante auf einen endlichen Wert an und verbleibt dann auf im Wesentlichen konstantem Niveau, bis die Hinterkante den Sensor passiert und das Signal wieder auf null abfällt. Dieses einer Bremskraft entsprechende Signal fällt bei Anwesenheit eines Defektes im Plateaubereich geringfügig ab, da der Defekt die Wirbelstromausbreitung im Material und damit das Sekundärfeld stört. Bei der Hubkraft (Figur 4B) machen sich die Kanten in großen gegenläufig orientierten Ausschlägen bemerkbar, während der dazwischen auftretende Defekt eine im Vergleich dazu kleine annähernd sinusförmige Störung des Signals bewirkt.

Die im differentiellen Sensor SENS3 erzeugten Spannungssignale haben einen anderen Verlauf. Die Körperkanten machen sich gemäß Figur 5A im Spannungssignal der zweiten Spule S2, deren Spulenachse in x-Richtung verläuft, durch große Ausschläge in gegenläufige Richtungen bemerkbar, wobei jedoch beim zwischenliegenden Durchlaufen von ungestörtem Prüflingsmaterial das Spannungssignal verschwindet. Durchläuft ein Defekt den Sensorbereich, so entsteht das näherungsweise sinusförmige Defektsignal. Durch die erste Spule S1, deren Spulenebene parallel zur Prüflingsoberfläche verläuft, wird diejenige Komponente der Änderungen des magnetischen Flusses erfasst, die senkrecht zur Prüflingsoberfläche, also in Hubrichtung wirkt. Die Vorder- und Hinterkanten ergeben dabei gegenläufig orientierte große, verzerrte sinusförmige Ausschläge. Im defektfreien Zwischenbereich sinkt die Spannung auf null ab. Wenn ein Defekt auftritt, macht sich dieser als verzerrt sinusförmiger Ausschlag des Spannungssignals bemerkbar.

Beide Typen von Signalen, nämlich das auf die Kraftwirkungen zurückgehende Signal des Kraftsensors F-SENS und die induzierten elektrischen Spannungen des differentiellen Sensors SENS3 werden bei dem Prüfsystem SYS1 ausgewertet, um Aussagen über das geprüfte Material zu erhalten. Die Anwesenheit oder Abwesenheit von Defekten wird mit hoher Empfindlichkeit und hoher Dynamik mit Hilfe der ersten Auswerteeinheit A1 aus den Sensorsignalen des differentiellen Sensors SENS3 ermittelt. Zeitgleich wird für das gleiche Prüfvolumen aus den Signalen des Kraftsensors die spezifische elektrische Leifähigkeit des Prüflingsmaterials ermittelt. Dabei wird ein Quotient $F_z/F_x$ gebildet, dessen Dividend ein Maß für die Kraftwirkung in Hubrichtung ($F_z$) umfasst und dessen Divisor ein Maß für die Kraftwirkung parallel zur Bewegungsrichtung, also ein Maß für die Bremskraft ($F_x$) umfasst. Auf Basis dieser Messwerte kann gemäß dem in DE 10 2011 056 650 A1 beschriebenen Verfahren die elektrische Leifähigkeit des Werkstoffs des Prüflings ermittelt werden. Dabei können durch die Quotientenbildung Einflüsse der magnetischen Flussdichte des Magneten und des Abstandes zwischen dem Permanentmagnet und dem Werkstoff auf das Messergebnis minimiert werden, so dass eine kontaktlose Bestimmung der elektrischen Leitfähigkeit mit hoher Genauigkeit möglich ist.

Das Kombinationsprüfsystem SYS1 bzw. der Kombinationssensor SS hat einen mechanisch und elektrisch relativ einfachen und robusten Aufbau und kann beispielsweise zur Zertifizierung von elektrischen leitfähigen Materialien unmittelbar im Zusammenhang mit der Produktion verwendet werden, um neben der hochdynamischen und empfindlichen Prüfung auf Defekte auch noch präzise quantitative Angaben über die elektrische Leitfähigkeit zu machen. Solche Kombinationssensoren können beispielsweise bei der Aluminiumproduktion mit großem Vorteil eingesetzt werden und bisherige getrennte Prüfverfahren ersetzen.

Bei manchen Ausführungsformen hat ein Prüfsystem ein Sensorsystem mit zwei oder mehr differentiellen Sensoren, deren Aufbau ähnlich oder zueinander identisch sein kann.

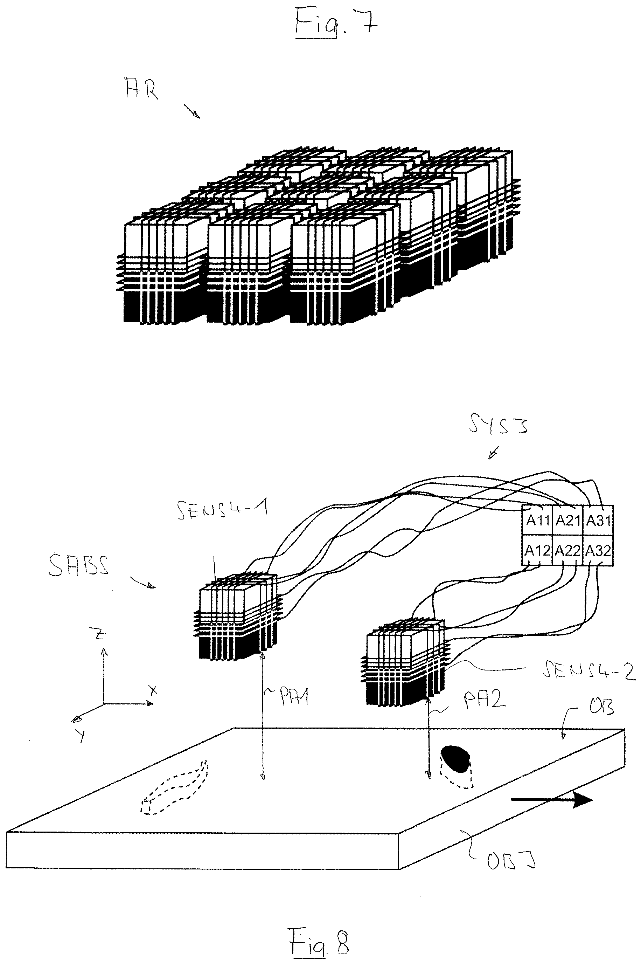

Fig. 7 zeigt ein Sensorsystem in Form eines Sensorarrays AR mit mehreren, z.B. neun, zueinander identischen differentiellen Sensoren, die relativ eng nebeneinander in einer zweidimensionalen ebenen Array-Anordnung in einem Rechteck-Raster vorliegen, um z.B. gleichzeitig größere Flächenbereiche eines zu prüfenden Werkstoffs erfassen zu können. In einem Sensorarray können auch weniger oder mehr Sensoren vorgesehen sein, z.B. von 4 Sensoren bis zu 20 Sensoren oder mehr.

Ein einzelner differentieller Sensor verfügt für jede Komponente (der Änderung des magnetischen Flusses) über eine charakteristische Abbildungsfunktion (Punktspreizfunktion). Wenn nun mehrere Sensoren in einem Sensorarray betrieben werden und die Signale der einzelnen Sensoren über mindestens einen Auswertealgorithmus mit der Position des Sensors korreliert werden, kann eine mindestens zweidimensionale (2D), vorzugsweise dreidimensionale (3D) Abbildung des untersuchten Prüfmaterials erstellt werden. Die Nutzung weiterer Auswertealgorithmen kann zu einer 3D-Rekonstruktion von Defekten führen. Differentielle Sensoren können aufgrund ihrer kompakten Bauform somit auch gut für bildgebende Prüf- oder Messverfahren verwendet werden.

Mindestens zwei differentielle Einzelsensoren können zur Kompensation von Störeinflüssen, z.B. Kompensation von Prüfabstandsänderungen, genutzt werden. Dazu muss das Abstandsverhalten (Abhängigkeit der Signalamplitude vom Prüfabstand) eines Einzelsensors möglichst gut bekannt sein. Betreibt man nun zwei Einzelsensoren mit zwei unterschiedlichen Prüfabständen, kann man bestimmen, um welchen Betrag sich der Prüfabstand ändert und das Messsignal entsprechend korrigieren (Abstandskompensation).

Anhand Fig. 8 wird eine solche Möglichkeit zur Nutzung mehrerer differentieller Sensoren in einem Prüfsystem SYS3 erläutert. Das Sensorsystem SABS hat einen ersten differentiellen Sensor SENS4-1 und einen zweiten differentiellen Sensor SENS4-2 identischer Bauform. Zusätzlich können noch weitere differentielle Sensoren vorgesehen sein, die nicht dargestellt sind. Die beiden Sensoren können z.B. in ein Sensorarray integriert sein. Die Signale der jeweils drei Spulen jedes der Sensoren werden in zugeordneten Auswerteeinheiten Aij mit i=1, 2, 3 und j=1, 2, 3 separat erfasst und dann korreliert. Die beiden Sensoren sind in z-Richtung gegeneinander versetzt, so dass sie sich in Bezug auf das Prüfobjekt OBJ nicht auf gleicher Höhe befinden, wenn das Sensorsystem in die Nähe der Prüflingsoberfläche OB positioniert wird. Ein erster Prüfabstand PA1 ist größer als der zweite Prüfabstand PA2. Durch gemeinsame Auswertung der Sensorsignale kann ein Prüfsystem mit Abstandskompensation geschaffen werden.

Bei den bildlich dargestellten Ausführungsformen ist der Permanentmagnet ein Magnet aus mindestens einem Stück eines magnetisierbaren Materials, welches sein statisches Magnetfeld behält, ohne dass, wie bei Elektromagneten, ein elektrischer Stromfluss zur Erzeugung des Magnetfelds benötigt wird. Der Permanentmagnet ist eine stromlos arbeitende magnetische Gleichfeldquelle. Manche Vorteile der beanspruchte Erfindung wären ggf. auch mit einer magnetischen Gleichfeldquelle zu erreichen, die mindestens eine mit Gleichstrom durchflossene Spule aufweist, wobei diese zur Erzielung eines konstanten Magnetfeldes möglichst an eine Konstantstromquelle angeschlossen werden sollte. Soweit die hier beschriebenen Vorteile im Wesentlichen erhalten bleiben, bezeichnet der Begriff "Permanentmagnet" im weiteren Sinne eine magnetische Gleichfeldquelle.

Es ist im Übrigen nicht zwingend, dass die magnetische Achse des Permanentmagneten oder der magnetischen Gleichfeldquelle möglichst senkrecht zur Oberfläche des Prüfobjekts steht. Auch eine schräge Orientierung oder eine Orientierung parallel zur Prüflingsoberfläche ist möglich. Die senkrechte Orientierung kann jedoch u.a. wegen der erzielbaren höheren Feldstärken besonders günstig sein.

## Patentansprüche

1. Differentieller Sensor zur Detektion von Anomalien in elektrisch leitfähigen Materialien mit:

   einem Permanentmagneten (PM) aus mindestens einem Stück eines magnetisierbaren Materials, welches sein statisches Magnetfeld behält, ohne dass ein elektrischer Stromfluss zur Erzeugung des Magnetfelds benötigt wird, wobei der Permanentmagnet eine magnetische Achse aufweist, die entlang der Verbindungslinie zwischen dem magnetischem Nordpol N und dem magnetischen Südpol S des Permanentmagneten verläuft;

   einer ersten Spule (S1) mit einer oder mehreren ersten Windungen, die um den Permanentmagneten herum verlaufen und eine erste Spulenachse (A1) definieren, wobei die erste Spulenachse (A1) parallel zur magnetischen Achse verläuft, und

   einer zweiten Spule (S2) mit einer oder mehreren zweiten Windungen, die um den Permanentmagneten herum verlaufen und eine zweite Spulenachse (A2) definieren, die quer zur ersten Spulenachse verläuft.

2. Differentieller Sensor nach Anspruch 1, **gekennzeichnet durch** eine dritte Spule (S3) mit einer oder mehreren dritten Windungen, die um den Permanentmagneten herum verlaufen und eine dritte Spulenachse (A3) definieren, die quer zur ersten Spulenachse (A1) und zur zweiten Spulenachse (A2) verläuft.

3. Differentieller Sensor nach Anspruch 1 oder 2, **dadurch gekennzeichnet, dass** die Spulenachsen (A1, A2, A3) wechselseitig senkrecht zueinander orientiert sind.

4. Differentieller Sensor nach einem der vorhergehenden Ansprüche, **dadurch gekennzeichnet, dass** die erste Spule (S1), die zweite Spule (S2) und die dritte Spule (S3) an dem Permanentmagneten fixiert ist.

5. Differentieller Sensor nach einem der vorhergehenden Ansprüche, **dadurch gekennzeichnet, dass** der differentielle Sensor (SENS3) mit einem Kraftsensor (F-SENS) mechanisch derart gekoppelt ist, dass auf den differentiellen Sensor einwirkende Lorentzkräfte mittels des Kraftsensors in mehreren Raumrichtungen erfassbar sind.

6. Prüfsystem zur Detektion von Anomalien in elektrisch leitfähigen Materialien mit:

   mindestens einem differentiellen Sensor (SENS1, SENS2, SENS3) nach einem der vorhergehenden Ansprüche; und

   einer Auswerteeinrichtung (A, A1), die konfiguriert ist, in den Windungen der Spulen (S1, S2, S3) des differentiellen Sensors induzierte elektrische Spannungen oder daraus abgeleitete Signale separat für jede Spule zu erfassen und durch Anwendung mindestens eines Auswerteverfahrens zu korrelieren.

7. Prüfsystem nach Anspruch 6, **dadurch gekennzeichnet, dass** die Auswerteeinrichtung (A, A1) konfiguriert ist, ein auf einen Defekt hinweisendes Defektsignal nur dann zu erzeugen, wenn in der ersten Spule und in der zweiten Spule eine für einen Defekt typische Spannungsänderung induziert wird.

8.  Prüfsystem nach Anspruch 6 oder 7, **gekennzeichnet durch** einen Kraftsensor (F-SENS), der mechanisch mit dem differentiellen Sensor (SENS3) derart gekoppelt ist, dass auf den differentiellen Sensor einwirkende Lorentzkräfte mittels des Kraftsensors in mehreren Raumrichtungen erfassbar sind, und eine Auswerteeinrichtung (A2) zur Auswertung von Signalen des Kraftsensors für mehrere Raumrichtungen.

9.  Prüfsystem nach einem der Ansprüche 6 bis 8, **dadurch gekennzeichnet, dass** bei der Auswertung der Signale des Kraftsensors ein Quotient gebildet wird, dessen Dividend ein Maß für die Kraftwirkung senkrecht zur Oberfläche des Prüflings umfasst und dessen Divisor ein Maß für die Kraftwirkung parallel zur Bewegungsrichtung umfasst.

10. Prüfsystem nach einem der Ansprüche 6 bis 9, **dadurch gekennzeichnet, dass** das Prüfsystem (SYS3) ein Sensorsystem (SABS) mit mindestens zwei differentiellen Sensoren (SENS4-1, SENS4-2) aufweist, die derart gegeneinander versetzt angeordnet sind, dass sie sich in unterschiedlichen Prüfabständen (PA1, PA2) zu einem Prüfobjekt befinden, wenn das Sensorsystem in die Nähe der Oberfläche (OB) des Prüfobjekts positioniert wird.

11. Prüfsystem nach einem der Ansprüche 6 bis 10, **dadurch gekennzeichnet, dass** die Auswerteeinrichtung für eine Abstandskompensation konfiguriert ist.

12. Prüfsystem nach einem der Ansprüche 6 bis 11, **dadurch gekennzeichnet**, mehrere differentielle Sensoren ein eindimensionales oder zweidimensionales Sensorarray (AR) bilden.

13. Verfahren zur Detektion von Anomalien in elektrisch leitfähigen Materialien unter Verwendung eines differentiellen Sensors gemäß einem der Ansprüche 1 bis 5 und/oder unter Verwendung eines Prüfsystems nach einem der Ansprüche 6 bis 12 mit folgenden Schritten:

> Anordnen des differentiellen Sensors in der Nähe einer Oberfläche eines Prüfobjekts aus elektrisch leitfähigem Material in der Weise, dass ein vom Permanentmagneten erzeugtes Magnetfeld in das Prüfobjekt bis in eine Eindringtiefe eindringen kann;
> Erzeugen einer Relativbewegung zwischen dem differentiellen Sensor und einem Prüfobjekt aus dem elektrisch leitenden Material parallel zu einer Bewegungsrichtung;
> Erfassen von in den Windungen der Spulen (S1, S2, S3) des differentiellen Sensors induzierten elektrischen Spannungen oder daraus abgeleitete Signalen separat für jede Spule; und
Auswerten der in den Spulen induzierten elektrischen Spannungen oder daraus abgeleitete Signalen durch Anwenden mindestens eines Auswerteverfahrens.

**Claims**

1.  Differential sensor for the detection of anomalies in electrically conductive materials with:

> a permanent magnet (PM) composed of at least one piece of a magnetizable material that maintains its static magnetic field without an electrical current flow being required to generate the magnetic field, wherein the permanent magnet has a magnetic axis which runs along the joining line between the magnetic north pole N and the magnetic south pole S of the permanent magnet;
> a first coil (S1) with one or more first windings which run around the permanent magnet and define a first coil axis (A1), wherein the first coil axis (A1) runs parallel to the magnetic axis, and a second coil (S2) with one or more second windings which run around the permanent magnet and define a second coil axis (A2) which runs transversely to the first coil axis.

2.  Differential sensor according to claim 1, **characterized by** a third coil (S3) with one or more third windings which run around the permanent magnet and define a third coil axis (A3) which runs transversely to the first coil axis (A1) and to the second coil axis (A2).

3.  Differential sensor according to claim 1 or 2, **characterized in that** the coil axes (A1, A2, A3) are alternately oriented perpendicularly to one another.

4.  Differential sensor according to one of the preceding claims, **characterized in that** the first coil (S1), the second coil (S2) and the third coil (S3) are fixed to the permanent magnet.

5.  Differential sensor according to one of the preceding claims, **characterized in that** the differential sensor (SENS3) is mechanically coupled to a force sensor (F-SENS) in such a way that Lorentz forces acting on the differential sensor can be sensed in multiple spatial directions by means of the force sensor.

6.  Inspection system for the detection of anomalies in electrically conductive materials with:

> at least one differential sensor (SENS1, SENS2, SENS3) according to one of the preceding claims; and

an evaluation device (A, A1) which is configured for sensing separately for each coil electrical voltages induced in the windings of the coils (S1, S2, S3) of the differential sensor, or signals derived therefrom, and correlating them by applying at least one evaluation method.

7. Inspection system according to claim 6, **characterized in that** the evaluation device (A, A1) is configured only to generate a defect signal, indicating a defect, whenever a change in voltage that is typical of a defect is induced in the first coil and in the second coil.

8. Inspection system according to claim 6 or 7, **characterized by** a force sensor (F-SENS) which is mechanically coupled to the differential sensor (SENS3) in such a way that Lorentz forces acting on the differential sensor can be sensed in multiple spatial directions by means of the force sensor, and an evaluation device (A2) for the evaluation of signals of the force sensor for multiple spatial directions.

9. Inspection system according to one of claims 6 to 8, **characterized in that** the evaluation of the signals of the force sensor involves the forming of a quotient, the dividend of which is a measure of the force effect perpendicular to the surface of the test piece and the divisor of which is a measure of the force effect parallel to the direction of movement.

10. Inspection system according to one of claims 6 to 9, **characterized in that** the inspection system (SYS3) has a sensor system (SABS) with at least two differential sensors (SENS4-1, SENS4-2) which are arranged offset with respect to one another in such a way that they are at different inspection distances (PA1, PA2) from a test object when the sensor system is positioned in the vicinity of the surface (OB) of the test object.

11. Inspection system according to one of claims 6 to 10, **characterized in that** the evaluation device is configured for distance compensation.

12. Inspection system according to one of claims 6 to 11, **characterized in that** multiple differential sensors form a one-dimensional or two-dimensional sensor array (AR).

13. Method for the detection of anomalies in electrically conductive materials, using a differential sensor according to one of claims 1 to 5 and/or using an inspection system according to one of claims 6 to 12 with the following steps:

arranging the differential sensor in the vicinity of a surface of a test object of electrically conductive material in such a way that a magnetic field generated by the permanent magnet can penetrate into the test object to a penetration depth; generating a relative movement between the differential sensor and a test object of the electrically conducting material parallel to a direction of movement;

sensing separately for each coil electrical voltages induced in the windings of the coils (S1, S2, S3) of the differential sensor, or signals derived therefrom; and

evaluating the electrical voltages induced in the coils, or signals derived therefrom, by applying at least one evaluation method.

**Revendications**

1. Capteur différentiel destiné à la détection d'anomalies dans des matériaux électriquement conducteurs, ledit capteur comprenant :

un aimant permanent (PM) comportant au moins une pièce d'un matériau magnétisable qui conserve son champ magnétique statique sans nécessiter un flux de courant électrique pour générer le champ magnétique, l'aimant permanent comportant un axe magnétique qui s'étend le long de la ligne de liaison entre le pôle nord magnétique N et le pôle sud magnétique S de l'aimant permanent ;

une première bobine (S1) comportant un ou plusieurs premiers enroulements qui s'étendent autour de l'aimant permanent et qui définissent un premier axe de bobine (A1), le premier axe de bobine (A1) s'étendant parallèlement à l'axe magnétique, et

une deuxième bobine (S2) comportant un ou plusieurs deuxièmes enroulements qui s'étendent autour de l'aimant permanent et qui définissent un deuxième axe de bobine (A2) qui s'étend transversalement au premier axe de bobine.

2. Capteur différentiel selon la revendication 1, **caractérisé par** une troisième bobine (S3) comportant un ou plusieurs troisièmes enroulements qui s'étendent autour de l'aimant permanent et qui définissent un troisième axe de bobine (A3) qui s'étend transversalement au premier axe de bobine (A1) et au deuxième axe de bobine (A2).

3. Capteur différentiel selon la revendication 1 ou 2, **caractérisé en ce que** les axes de bobine (A1, A2, A3) sont orientés alternativement perpendiculairement les uns aux autres.

**4.** Capteur différentiel selon l'une des revendications précédentes, **caractérisé en ce que** la première bobine (S1), la deuxième bobine (S2) et la troisième bobine (S3) sont fixées à l'aimant permanent.

**5.** Capteur différentiel selon l'une des revendications précédentes, **caractérisé en ce que** le capteur différentiel (SENS3) est accouplé mécaniquement à un capteur de force (F-SENS) de telle sorte que des forces de Lorentz agissant sur le capteur différentiel peuvent être détectées dans plusieurs directions spatiales au moyen du capteur de force.

**6.** Système de test destiné à la détection d'anomalies dans des matériaux électriquement conducteurs, ledit système comprenant :

au moins un capteur différentiel (SENS1, SENS2, SENS3) selon l'une des revendications précédentes ; et
un dispositif d'évaluation (A, A1) qui est conçu pour détecter des tensions électriques induites dans les enroulements des bobines (S1, S2, S3) du capteur différentiel ou des signaux qui en dérivent séparément pour chaque bobine et pour les corréler à l'aide d'au moins un procédé d'évaluation.

**7.** Système de test selon la revendication 6, **caractérisé en ce que** le dispositif d'évaluation (A, A1) est conçu pour générer un signal de défaut indiquant un défaut uniquement lorsqu'une variation de tension typique d'un défaut est induite dans la première bobine et dans la deuxième bobine.

**8.** Système de test selon la revendication 6 ou 7, **caractérisé par** un capteur de force (F-SENS) qui est accouplé mécaniquement au capteur différentiel (SENS3) de telle sorte que des forces de Lorentz agissant sur le capteur différentiel peuvent être détectées dans plusieurs directions spatiales à l'aide du capteur de force, et
un dispositif d'évaluation (A2) destiné à évaluer des signaux du capteur de force pour plusieurs directions spatiales.

**9.** Système de test selon l'une des revendications 6 à 8, **caractérisé en ce que**, lors de l'évaluation des signaux du capteur de force, un quotient est formé dont le dividende comprend une mesure de l'effet dynamique perpendiculaire à la surface de l'objet à tester et dont le diviseur comprend une mesure de l'effet dynamique parallèle à la direction du mouvement.

**10.** Système de test selon l'une des revendications 6 à 9, **caractérisé en ce que** le système de test (SYS3) comporte un système de capteurs (SABS) pourvu d'au moins deux capteurs différentiels (SENS4-1, SENS4-2) qui sont disposés de manière décalée l'un de l'autre de sorte qu'ils se trouvent à des distances de test différentes (PA1, PA2) par rapport à un objet de test lorsque le système de capteurs est positionné près de la surface (OB) de l'objet de test.

**11.** Système de test selon l'une des revendications 6 à 10, **caractérisé en ce que** le dispositif d'évaluation est conçu pour effectuer une compensation de distance.

**12.** Système de test selon l'une des revendications 6 à 11, **caractérisé en ce que** plusieurs capteurs différentiels forment un réseau de capteurs unidimensionnel ou bidimensionnel (AR).

**13.** Procédé de détection d'anomalies dans des matériaux électriquement conducteurs à l'aide d'un capteur différentiel selon l'une des revendications 1 à 5 et/ou d'un système de test selon l'une des revendications 6 à 12, ledit procédé comprenant les étapes suivantes :

disposer le capteur différentiel au voisinage d'une surface d'un objet de test en matériau électriquement conducteur de telle sorte qu'un champ magnétique généré par l'aimant permanent puisse pénétrer dans l'objet de test jusqu'à une profondeur de pénétration ;
générer un mouvement relatif entre le capteur différentiel et un objet de test en matériau électriquement conducteur parallèlement à une direction de mouvement ;
détecter des tensions électriques induites dans les enroulements des bobines (S1, S2, S3) du capteur différentiel ou des signaux en dérivant séparément pour chaque bobine ; et
évaluer des tensions électriques induites dans les bobines ou des signaux qui en dérivent à l'aide d'au moins un procédé d'évaluation.

Fig. 1

SENS1

SYS

Z

KS

X

Y

U$_y$

U$_x$

A

Z, $\vec{F_z}$, A1

PM

S3

U$_z$

S1

N

Y, $\vec{F_y}$, A3

X, $\vec{F_x}$, A2

D1

D2

OB

S2

V

R

OBJ

S2

S3 — PM

SENS 2

S2

PM

S1

N

S1

N

SENS 1

S

S

Fig. 2

Fig. 3

Fig. 4A

Fig. 4B

Fig. 5A

Fig. 5B

Fig. 6

Fig. 7

AR

Fig. 8

SYS3

SENS4-1

SABS

A11 A21 A31
A12 A22 A32

z

x

y

~PA1

PA2

SENS4-2

OB

OBJ

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7023205 B1
- WO 0058695 A
- US 6002251 A
- WO 2007053519 A2

- DE 102011056650 A1
- JP 2006194602 A
- JP H06294775 A

**In der Beschreibung aufgeführte Nicht-Patentliteratur**

- **T. AASTROEM.** From Fifteen to Two Hundred NDT-Methods in Fifty Years. *17th World Conference on Nondestructive Testing,* 2008
- **SUN, Y. ; UDPA, S. ; LORD, W. ; UDPA, L. ; OUYANG, T.** Application of Motion Induced Remote-Field Eddy Current Effect to Online Inspection and Quality Examination of Rolling Metallic Strips. *AIP Conf. Proc.,* 2001, vol. 557, 1541-1548

- **MOOK, G. ; HESSE, O. ; UCHANIN, V.** Deep Penetrating eddy currents and Probes. *9th European Conference on Non-Destructive-Testing,* 2006
- **SUN, Y. ; KANG, Y. ; QUIO, C.** A new NDT method based on permanent magnetic field pertubation. *NDT & E International,* 2011, vol. 44, 1-7
- **BRAUER, H. ; ZIOLKOWSKI, M.** Eddy Current Testing of Metallic Sheets with Defects Using Force Measurements. *Serbian Journal of Electrical Engineering,* 2008, vol. 5, 11-20